# EUROPÄISCHE PATENTANMELDUNG

(11) **EP 0 827 302 A2**
(43) Veröffentlichungstag der Anmeldung: **04.03.1998**
(21) Anmeldenummer: 97113049.7
(22) Anmeldetag: 29.07.1997
(51) Int. Cl.: H04L 1/22

(54) **Verfahren zur Isolierung von fehlerhaften, austauschbaren Einheiten von beliebig strukturierten Kommunikationsanordnungen**

(30) Priorität: 30.08.1996 DE 19635331
(71) Anmelder: SIEMENS AKTIENGESELLSCHAFT, 80333 München (DE)
(72) Erfinder: Wintermantel, Jörg, 81475 München (DE)

(57) **Zusammenfassung**

Mit Hilfe einer Ignorierungstabelle (FIT) wird jede in der Kommunikationsanordnung (KA) gemeldete Fehlermeldung (FR) überprüft, ob sie ignoriert werden darf. Hierbei werden innerhalb eines fehlerindividuellen Zeitraums auftretende Fehlermeldungen (FR) berücksichtigt. Nicht ignorierbare Fehlermeldungen (FR) werden klassifiert und mit Hilfe von konfigurierter Isolierungs- und Vergleichstabellen (GFIT,CT) sowie systemspezifischen Fehlerisolierungsprozeduren (SSIP) auf eine austauschbare Einheit (FRU) isoliert. Diese Konzeption erlaubt eine Trennung von generischer und systemabhängiger Software und ist mit geringen Modifikationen in Kommunikationsanordnungen (KA) mit unterschiedlichsten schaltungstechnischen Varianten einsetzbar.

## Beschreibung

In komplexen technischen Anordnungen, insbesondere Kommunikationsanordnungen, die aus mehreren untereinander kommunizierenden und abhängigen Einheiten - insbesondere austauschbaren Baugruppen - sowie übergeordneten Einheiten - beispielsweise Funktionsgruppen - bestehen, wird bei einem auftretenden Fehler versucht, die den Fehler verursachende Einheit - Baugruppe oder Funktionsgruppe - zu isolieren, d.h. zu ermitteln. Nach einer Fehlerisolierung wird durch automatisch eingeleitete, geeignete Recovery-Verfahren versucht, den vor dem Auftreten des Fehlers eingestellten Zustand der Kommunikationsanordnung wieder herzustellen. Bleiben die Recovery-Maßnahmen erfolglos, wird die den Fehler verursachende bzw. die fehlerhafte Einheit - Baugruppe oder Funktionsgruppe - an einer Bedieneinrichtung der Kommunikationsanordnung alarmiert, um einen Austausch der fehlerhaften Einheit zu bewirken.

Bei komplexen, umfangreichen Kommunikationsanordnungen, die meist mehrere Prozessoren mit einer verteilten Prozeßarchitektur umfassen, verursachen aktuell auftretende schaltungstechnische oder programmtechnische Fehler meist mehrere Fehlermeldungen, die aufgrund von Folgefehlern in anderen Einheiten der Kommunikationsanordnung zu unterschiedlichen Zeitpunkten gebildet und an eine zentrale Fehlerisolierung übermittelt werden. Dies bedeutet, daß für eine Isolierung der fehlerhaften Einheit bzw. Baugruppe oder Funktionsgruppe umfangreiche Bewertungen der gemeldeten Fehlermeldungen erforderlich sind, wobei spezielle schaltungstechnische und programmtechnische Ausprägungen der Kommunikationsanordnung einzubeziehen sind.

Ein weiteres Problem bei den bekannten Fehlerisolierungsverfahren stellt ihre enge Kopplung insbesondere an die schaltungstechnische Ausprägung der Kommunikationsanordnung dar. Dies bedeutet, daß die programmtechnisch realisierten Fehlerlokalisierungsverfahren nicht für Kommunikationsanordnungen mit unterschiedlichen schaltungstechnischen Ausprägungen einsetzbar sind.

Die der Erfindung zugrundeliegende Aufgabe besteht darin, Fehlerlokalisierungsverfahren derart zu konzipieren, daß sie mit möglichst geringen Modifikationen für Kommunikationsanordnungen mit unterschiedlichsten schaltungstechnischen Ausprägungen einsetzbar sind. Die Aufgabe wird durch die Merkmale des Anspruchs 1 gelöst.

Ein wesentlicher Aspekt des erfindungsgemäßen Verfahrens ist darin zu sehen, daß mit Hilfe einer Ignorierungstabelle Fehlermeldungen ermittelt werden, die ignoriert, d.h. nicht weiter bewertet werden. Mit Hilfe einer Isolierungstabelle werden die weiteren Lokalisierungsmaßnahmen ermittelt, wozu die Fehlermeldungen in fünf Fehlerklassen klassifiziert sind. Durch diese Klassifizierung und der vorteilhaften Konzeption einer Ignorierungs- und Isolierungstabelle wird eine weitgehende Trennung von schaltungstechnisch unabhängigen und abhängigen Fehlerlokalisierungsmaßnahmen erreicht, wodurch das vorteilhaft programmtechnisch realisierte Fehlerlokalisierungsverfahren für Kommunikationsanordnungen mit unterschiedlichen schaltungstechnischen Ausprägungen einsetzbar ist. Lediglich auf spezielle Ausgestaltungen der Kommunikationsanordnung sind die Tabellen abzustimmen. Die Tabellen - Ignorierungstabelle und die Fehlerlokalisierungstabelle - können einfach durch menuegesteuerte, betriebstechnische Eingaben am Betriebsterminal der Kommunikationsanordnung modifiziert bzw. bei der Ersterstellung konfiguriert werden. Bei ständig kürzeren Entwicklungszyklen von Kommunikationsanordnungen bzw. Kommunikationseinrichtungen, insbesondere im Netzzugangsbereich von Kommunikationsanlagen, stellt die Weiterbenutzung von Fehlerlokalisierungsverfahren bzw. Fehlerlokalisierungs-Software in unterschiedlichen Kommunikationseinrichtungen und Weiterentwicklungen dieser Einrichtungen einen wesentlichen Vorteil dar, durch den sowohl Entwicklungskosten als auch Entwicklungszeiten für Kommunikationseinrichtungen reduziert werden können.

Weitere vorteilhafte Ausgestaltungen insbesondere der Ignorierungstabelle, der Isolierungstabelle und der Vergleichstabellen sowie deren Anwendung sind den weiteren Ansprüchen zu entnehmen.

Im folgenden wird das erfindungsgemäße Verfahren anhand von zeichnerischen Darstellungen näher erläutert. Dabei zeigen
- FIG 1: in einem Blockschaltbild eine allgemeine Struktur einer Kommunikationsanordnung,
- FIG 2: in einem Blockschaltbild die Tabellenkonfiguration der erfindungsgemäßen Fehlerisolierung,
- FIG 3a: in einem Blockschaltbild einen Fehlerignorierungsgraph,
- FIG 3b: in einem Blockschaltbild die Struktur der Ignorierungstabelle,
- FIG 3c: in einem Blockschaltbild die Struktur der Vergeichstabelle,
- FIG 3d: in einem Blockschaltbild die Struktur der Isolierungstabelle und
- Fig. 4: in einem Ablaufdiagramm die erfindungsgemäße Fehlerisolierung.

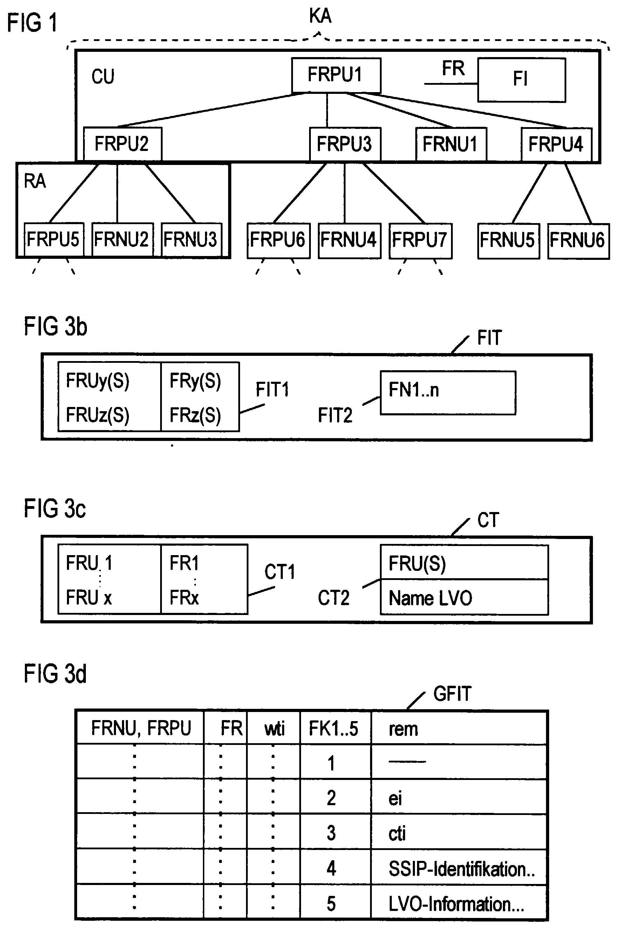

Für das Ausführungsbeispiel sei eine allgemeine, in FIG 1 dargestellte Struktur einer Kommunikationsanordnung KA, beispielsweise einer Kommunikationsanordnung in einem Zubringernetz eines Kommunikationssystems, vorausgesetzt. Die Kommunikationsanordnung KA ist durch unterschiedliche, einzeln austauschbare Einheiten FRU gebildet, wobei prinzipiell prozessorgesteuerte Einheiten FRPU und nicht-prozessorgesteuerte Einheiten FRNU vorgesehen sind. Die prozessorgesteuerten Einheiten FRPU überwachen hierbei stets die mit ihnen verbundenen, nicht-prozessorgesteuerten Einheiten FRNU. Die Einheiten FRU der Kommunikationsanordnung stellen die kleinsten austauschbaren Einheiten, beispielsweise Baugruppen oder Steckeinheiten, dar. Des weiteren umfaßt die Kommunikationsanordnung einen zentralen Bereich CU, d.h. einen übergeordneten Bereich und einen übergeordneten, peripheren oder Server-Bereich RA, wobei der zentrale Bereich CU durch zentrale, d.h. übergeordnete Einheiten FRU und der periphere Bereich RA durch mehrere übergeordnete dezentrale Einheiten FRU gebildet ist. Der zentrale Bereich CU bzw. die zentrale Einrichtung weist heim Ausführungsbeispiel vier austauschbare, prozessorgesteuerte Einheiten FRPU1..4 und eine austauschbare, nichtprozessorgesteuerte Einheit FRNU1 auf. Die zweite prozessorgesteuerte Einheit FRPU2 ist mit einer fünften, austauschbaren prozessorgesteuerten Einheit FRPU5 und einer zweiten sowie einer dritten nicht- prozessorgesteuerten Einheit FRNU2,3 verbunden, wobei die fünfte prozessorgesteuerte Einheit FRPU5 sowie die zweite und dritte nicht-prozessorgesteuerte Einheit FRNU2,3 einen übergeordneten, peripheren Bereich RA bzw. eine übergeordnete periphere Einrichtung bilden. Die fünfte prozessorgesteuerte Einheit FRPU5 ist mit weiteren, nicht dargestellten Einheiten verbunden - durch strichlierte Linien angedeutet. Die dritte prozessorgesteuerte Einheit FRPU3 ist jeweils mit einer sechsten und siebten prozessorgesteuerten Einheit FRPU6,7 und einer vierten nicht-prozessorgesteuerten Einheit FRNU4 verbunden, wobei an die prozessorgesteuerten Einheiten FRPU6,7 weitere, nicht dargestellte Einheiten anschließbar sind - durch strichlierte Linien angedeutet. Die vierte prozessorgesteuerte Einheit FRPU4 ist mit einer fünften und sechsten nicht-prozessorgesteuerten Einheit FRNU5,6 verbunden.

Von den nicht-prozessorgesteuerten Einheiten FRNU1..6 existieren keine Verbindungen zu weiteren Einheiten, da eine nicht-prozessorgesteuerte Einheit FRNU aufgrund der fehlenden Prozessortechnik keine anderen Einheiten FRU überwachen kann, insbesondere keine Fehlermeldungen empfangen kann. Die in FIG 1 dargestellte Struktur zeigt alle Varianten von prozessorgesteuerten und nicht-prozessorgesteuerten Einheiten FRNU, FRPU sowie die Zuordnung in übergeordnete zentrale oder periphere Bereiche CU, RA bzw. Einrichtungen.

Bei der angegebenen Struktur einer Kommunikationsanordnung KA wird jeder in den Einheiten FRU detektierbare Fehler von einer prozessorgesteuerten Einheit FRPU detektiert und durch eine eindeutige Fehlermeldung FR repräsentiert. Von allen im Bereich der Kommunikationsanordnung KA angeordneten, prozessorgesteuerten Einrichtungen FRPU1..7 werden diese Fehlermeldungen FR an eine Fehlerisolierung FI übermittelt, die beispielsweise im zentralen Bereich CU, d.h. in einer zentralen Einrichtung angeordnet oder alternativ auf mehrere prozessorgesteuerte Einheiten FRPU1..7 verteilt ist, wobei die Fehlerisolierung FI im wesentlichen durch das erfindungsgemäße Verfahren realisiert ist. Ein wesentlicher Aspekt der Fehlerisolierung FI ist die geeignete Klassifizierung aller möglichen, in der Kommunikationsanordnung KA detektierbaren Fehler bzw. Fehlermeldungen FR sowie die Zuordnung von Ignorierungs-, Isolierungs- und Vergleichstabellen, um eine vorteilhafte Separierung der Fehlerlokalisierungs-Software in einen generischen und einen systemspezifischen Teil zu ermöglichen. Der generische Teil der Software umfaßt diejenigen Programmteile, die ohne Programmänderungen kommunikationsanordnungsunabhängig wiederverwendbar sind sowie Tabellen, die entsprechend der aktuellen Konfiguration der Kommunikationsanordnung zu modifizieren sind. Für die Konfiguration insbesondere der Tabellen kann eine spezielle Software - nicht dargestellt - konzipiert werden, die eine geeignete komfortable Oberfläche zur Eingabe der Tabelleneinträge bereitstellt. Als systemspezifische Teile der Software sind diejenigen Programmteile bestimmt, die für eine Isolierung von komplexen Fehlern unter Berücksichtigung der aktuellen Konfiguration der Kommunikationsanordnung KA zusätzlich vorzusehen sind und demnach nicht generischer Natur sind.

Nach dem erfindungsgemäßen Verfahren werden die in der Kommunikationsanordnung KA detektierbaren Fehler FR in fünf Fehlerklassen FK1..5 klassifiziert. Der ersten Fehlerklasse FK1 sind diejenigen Fehlermeldungen FR zugeordnet, bei denen die den Fehler verursachende Einheit FRU direkt aus der übermittelten Fehlermeldung FR identifiziert werden kann. Der zweiten Fehlerklasse FK2 sind diejenigen Fehlermeldungen FR zugeordnet, bei denen eine prozessorgesteuerte Einheit FRPU für eine andere, den Fehler verursachende Einheit FRU eine Fehlermeldung FR übermittelt und die den Fehler verursachende Einheit FRU indirekt durch die Fehlermeldung FR über einen Tabellenzugriff (Isolierungstabelle GFIT) identifiziert werden kann. Der dritten Fehlerklasse FK3 sind diejenigen Fehlermeldungen FR zugeordnet, bei denen die Fehlerisolierung durch einen Vergleich der Fehlermeldungen FR von Einheiten FRNU durchgeführt wird, wobei diese Einheiten FRU jeweils im hierarchisch gleichen Kommunikationsanordnungs-Level liegen und bezüglich eines auftretenden Fehlers von einer anderen Einheit FRU im übergeordneten Level abhängig sind. Da nur Abhängigkeiten zwischen den Fehlermeldungen FR im gleichen Kommunikationsanordnungs-Level in diesen Vergleich eingehen, kann die entsprechende Fehlerisolierung durch Abarbeitung einer geeignet strukturierten Vergleichstabelle CT erfolgen. Bei den Fehlermeldungen FR der vierten Klasse FK4 können die den Fehler verursachende Einheiten FRU nur durch System- und schaltungsspezifische Prozeduren - beispielsweise eigenständiger Test einer Baugruppe oder Systemtests, bei denen mehrere Baugruppen involviert sind - ermittelt werden. Die fünfte Fehlerklasse FK5 umfaßt diejenigen Fehlermeldungen FR, für die eine Fehlerisolierung auf eine austauschbare Einheit FRU - beispielsweise einer Baugruppe - nicht möglich ist. Für diese Fehlermeldungen ist eine Liste LVO vorgesehen, in der für die nicht isolierbaren Fehlermeldungen FR verdächtige, d.h. möglicherweise fehlerhafte Einheiten FPNU, FRNU angegeben sind.

In FIG 2 ist die Vorgehensweise zur Konfiguration der Tabellen, die für die erfindungsgemäße Fehlerisolierung FI vorgesehen sind, dargestellt. Hier bildet die "offline" durchgeführte Fehlerklassifizierung die Grundlage dieser Konfiguration. Ebenfalls ist in FIG 2 die Aufteilung der Software in einen generischen und einen systemspezifischen Teil gezeigt, wobei der generische Teil aus der allgemeinen Software-Kontrollstruktur sowie den konfigurierten Tabellen und der systemspezifische Teil die kommunikationsanordnungsspezifischen Teile umfaßt.

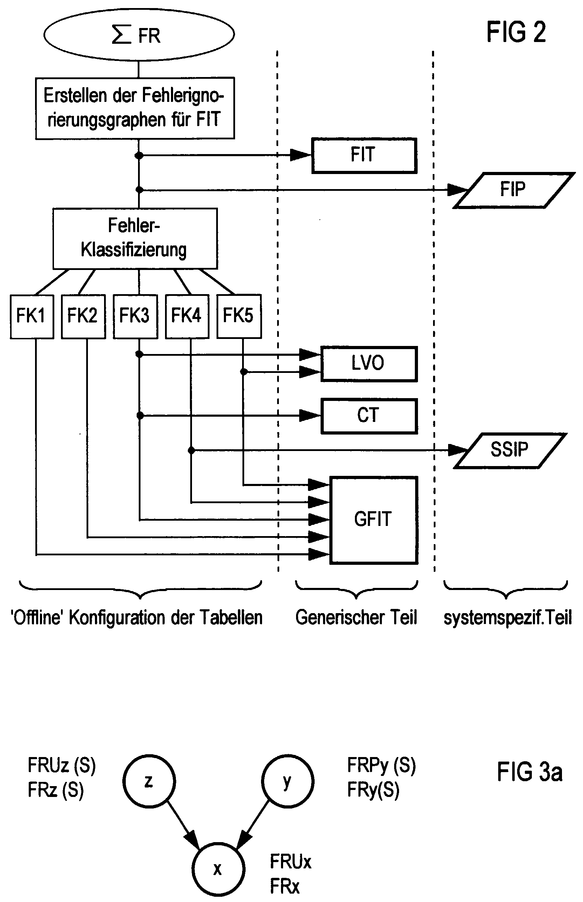

Für jede mögliche Fehlermeldung FR wird jeweils ein Fehlerignorierungsgraph - siehe hierzu FIG 3a - erstellt. Ein Fehlerignorierungsgraph stellt ein grafisches Gebilde dar, bei dem jeweils spezifisch für eine Fehlermeldung FR bzw. die diese Fehlermeldung FR meldende Einheit FRU die Abhängigkeit von Fehlern in übergeordneten Einheiten FRU(S) graphisch dargestellt ist. Hierbei ist in FIG 3a eine Einheit FRU durch einen Kreis repräsentiert, wobei für das Ausführungsbeispiel spezifisch für eine Fehlermeldung FRx bzw. die die Fehlermeldung FRx meldende Einheit FRUx angenommen wird, daß von zwei übergeordneten Einheiten FRUy(S), FRUz(S), in denen jeweils ursächlich der Fehler auftritt - beispielsweise Signal- oder Taktsignalerzeugung-Ausfall -, ebenfalls eine übergeordnete Fenlermeldung FRy(S),FRz(S) gemeldet wird. Diese Abhängigkeit wird durch die in FIG 3a dargestellten Pfeile gezeigt, wobei durch die Pfeilrichtung die Folgefehlerrichtung angegeben ist und ein Fehler in der am Pfeilanfang befindlichen Einheit FRU - im Ausführungsbeispiel die übergeordneten Einheiten FRUy(S), FRUz(S) - einen Folgefehler in der an der Pfeilspitze befindlichen Einheit FRU - im Ausführungsbeispiel die Einheit FRUx - verursacht und von jeder der Einheiten FRUx, FRUy(S), FRUz(S) eine Fehlermeldung FRx, FRy(S), FRz(S) übermittelt wird. Dies bedeutet, daß eine aktuell gemeldete Fehlermeldung FRx ignoriert werden darf, sofern von einer dieser übergeordneten Einheit FRUy(S), FRUz(S) eine Fehlermeldung FRy(S), FRz(S) gemeldet wird, da der Fehler in den übergeordneten Einheiten FRUy(S), FRUz(S) ursächlich auftritt. Folglich sind bezogen auf das Ausführungsbeispiel in eine erste Ignorierungstabelle FIT1 einer in FIG 3b dargestellten Ignorierungstabelle FIT in eine erste Spalte die übergeordneten Einheiten FRUy(S), FRUz(S) und in eine zweite Spalte die zugehörigen übergeordneten Fehlermeldungen FRy(S), FRz(S) eingetragen. In der in FIG 3b dargestellten ersten Ignorierungstabelle FIT1 sind darüber hinaus die für alle möglichen Fehlermeldungen FR ermittelten Fehlerignorierungsgraphen abgebildet - beispielhaft ist jedoch nur die Abbildung des vorhergehend erläuterten Fehlerignorierungsgraphen dargestellt.

Wie vorhergehend erläutert, sind in der ersten Spalte der ersten Ignorierungstabelle FIT1 spezifisch für eine Fehlermeldung FR, jeweils die übergeordneten Einheiten FRU(S) angegeben, die einen für die Fehlermeldung FR ursächlichen Fehler aufweisen können. In einer zweiten Spalte sind die jeweils entsprechenden übergeordneten Fehlermeldungen FR(S) für diese ursächlichen Fehler angegeben. Wird daher zusätzlich zur Fehlermeldung FR eine solche übergeordnete Fehlermeldung FR(S) an die Fehlerisolierung übermittelt, so repräsentiert diese Fehlermeldung FR nicht die den Fehler verursachende Einheit FRU und kann somit ignoriert werden. Der ursächliche Fehler wird hierbei durch die übergeordnete Fehlermeldung FR(S) repräsentiert. Wurde keine der in der ersten Ignorierungstabelle FIT1 angeführten übergeordneten Fehlermeldungen FR(S) empfangen, so wird untersucht, ob in einer zweiten Ignorierungstabelle FIT2 der Ignorierungstabelle FIT - siehe FIG 3b - zur Fehlermeldung FR zugehörige Funktionsnamen FN1..n angegeben sind. Ist dies der Fall, werden diese Funktionen nacheinander aufgerufen. Mit Hilfe der systemspezifischen Funktionen werden kommunikationsanordnungs-spezifische Zustände ermittelt, beispielsweise Betriebszustände von speziellen Einheiten FRU. In Abhängigkeit von den ermittelten Betriebszuständen kann entschieden werden, ob die empfangene Fehlermeldung FR ignoriert werden kann. Beispielsweise kann eine inaktive Baugruppe dazu führen, daß andere Baugruppen spezielle Fehlermeldungen FR absetzen, die ignoriert werden können.

Nach dem erfindungsgemäßen Verfahren sind, wie vorstehend erläutert, die möglichen Fehlermeldungen FR jeweils in fünf Fehlerklassen FK1..5 klassifiziert. Das Ergebnis der Klassifizierung wird in der Fehlerisolierungstabelle GFIT eingetragen, in der zu jeder möglichen Fehlermeldung FR eine Fehlerklasse FK1..5 eingetragen ist. Beim erfindungsgemäßen Verfahren stellt die Isolierungstabelle GFIT die wesentliche Tabelle dar, mit der eine Isolierung der Fehlermeldung FR gesteuert wird.

FIG 3d zeigt die prinzipielle Struktur der Isolierungstabelle GFIT. Die ersten beiden von insgesamt fünf Spalten der Fehlerisolierungstabelle GFIT enthalten für jede durch einen Fehler in der Kommunikationsanordnung KA verursachte Fehlermeldung FR die die Fehlermeldung FR übermittelnde Einheit FRU. Voraussetzung hierfür ist, daß die Fehlermeldungen FR in der Kommunikationsanordnung KA in einer einheitlichen Form gemeldet werden. Der Inhalt dieser beiden Spalten bildet den Suchschlüssel für die Tabelle, um die beim Empfang einer zu isolierenden - und nicht ignorierbaren - Fehlermeldung FR in der Isolierungstabelle GFIT entsprechend abgelegten Informationen aufzufinden bzw. Aktionen einzuleiten.

In einer weiteren Spalte sind den jeweiligen Fehlermeldungen FR zugeordnete Wartezeitinformationen wti eintragbar. Durch diese Wartezeitinformationen wti ist die angegeben, während der nach Empfang einer bestimmten Fehlermeldung FR auf den Empfang weiterer, eventuell ursächlicher Fehlermeldungen FR gewartet werden muß, bevor eine endgültige Entscheidung bezuglich einer Ignorierung der aktuellen Fehlermeldung FR getroffen werden kann. In der nächsten Spalte ist jeweils die Fehlerklasse FK1..5 angegeben, zu der die jeweiligen Fehlermeldung FR klassifiziert ist. In der dargestellten Isolierungstabelle GFIT sind die Fehlermeldungen FR nach den Funktionsklassen FK1..5 geordnet.

In der letzten Spalte sind jeweils für die eingetragenen Fehlermeldungen FR in Abhängigkeit von der angegebenen Fehlerklasse FK1..5 folgende zusätzliche erfindungswesentliche Informationen angegeben:
- Bei der Fehlerklasse FK1 sind keine zusätzlichen Informationen rem eingetragen, da die den Fehler verursachende Einheit FRU direkt durch die übermittelte Fehlermeldung FR isoliert wird.
- Bei einer angegebenen zweiten Fehlerklasse FK2 ist durch Angabe einer Einheiteninformation ei die den Fehler verursachende Einheit FRU indirekt bestimmt, d.h. isoliert.
- Bei einer angegebenen dritten Fehlerklasse FK3 ist ein Tabellenname eingetragen, durch den eine Vergleichstabelle CT bestimmt ist, mit deren Hilfe die einen komplexen Fehler verursachende Einheit FRU ermittelt werden kann.
- Bei einer angegebenen vierten Fehlerklasse FK4 ist ein Prozedurname angegeben, der eine systemspezifische, d.h. kommunikationsanordnungs-spezifische Prozedur SSIP identifiziert, mit deren Hilfe die den Fehler verursachende Einheit FRU isoliert wird.
- Bei Fehlermeldungen FR der fünften Fehlerklasse FK5 kann die den Fehler verursachende Einheit FRU nicht isoliert werden, jedoch ist als eine zusätzliche Information rem eine LVO-Information eingetragen, durch die eine Liste von verdächtigen, d.h. fehlerverdächtigen Einheiten FRNU, FRPU adressiert ist. In dieser Liste LVO sind für die Fehlermeldungen FR der fünften Fehlerklasse FK5 die Einheiten FRU angegeben, die bei der angegebenen Fehlermeldung FR fehlerverdächtig sind, d.h. den Fehler verursachen können. Eine eindeutige Fehlerisolierung FI ist bei Fehlern dieser Klasse aufgrund der kommunikationsanordnungs-spezifischen Gegebenheiten nicht möglich oder entsprechende Fehlerlokalisierungsprozeduren sind noch nicht realisiert.

Die in FIG 3c dargestellte Vergleichstabelle CT setzt sich aus zwei unterschiedlichen Vergleichstabellen CT1,2 zusammen, wobei die erste Vergleichstabelle CT1 in der Struktur der Ignorierungstabelle FIT1 entspricht. Für jede Fehlermeldung FR der dritten Fehlerklasse FK3 existiert ein Tabellenpaar CT1,2. Im Gegensatz zu den Ignorierungstabellen FIT1,2 stellen die beiden Vergleichstabellen CT1,2 das Abbild einer einzigen übergeordneten Einheit FRU(S) sowie mehrerer davon abhängiger Einheiten FRU dar. In den beiden Spalten der ersten Vergleichstabelle CT1 werden alle Einheiten FRU1..x sowie entsprechende Fehlermeldungen FR1..x eingetragen, die bei Auftreten eines bestimmten Fehlers in der übergeordneten Einheit FRU(S) übermittelt werden. Diese Fehlermeldungen FR1..x stellen folglich Folge-Fehlermeldungen FR dieses ursächlichen Fehlers in der Einheit FRU(S) dar, die in der zweiten Vergleichstabelle CT2 eingetragen sind. Da diese übergeordnete Einheit FRU(S) den ursächlichen Fehler nicht gemeldet hat - ein gemeldeter Fehler FR wäre sonst in dem vorausgegangenen Fehlerignorierungsverfahren ignoriert worden -, existieren bei Auftreten einer Fehlermeldung FR, die der dritten Fehlerklasse FK3 angehört, bezüglich der Fehlermeldungen FR(i) drei Möglichkeiten:
Variante a: Die verbleibenden, von den übergeordneten Einheiten FRU(S) abhängigen Einheiten FRU melden ebenfalls die äquivalenten Fehlermeldungen FR. Dies bedeutet, daß der ursächliche Fehler auf die übergeordnete Einheit FRU(S) zu isolieren ist, obwohl keine Fehlermeldung FR für diese Einheit FRU(S) übermittelt ist.
Variante B: Die bestimmte Einheit FRU ist die einzige von mehreren übergeordneten Einheiten FRU(S), die einen Fehler meldet. Dies bedeutet, daß der ursächliche Fehler auf die bestimmte Einheit FRU zu isolieren ist.
Variante c: Der Fehlerstatus der verbleibenden abhängigen Einheiten FRU kann nicht abgefragt werden. Dies ist beispielsweise der Fall bei nicht konfigurierbaren und inaktiven Einheiten FRU. Da der Fehler folglich nicht eindeutig isolierbar ist, werden die verdächtigen Einheiten FRU in eine Liste LVO eingetragen, deren Name ebenfalls in der zweiten Vergleichstabelle CT2 abgelegt ist.

Die Isolierung von Fehlermeldungen FR der dritten Fehlerklasse FK3 kann hierbei durch systematische Bearbeitung der beiden Vergleichstabellen CT1,2 erfolgen.

Ein wesentlicher Aspekt des erfindungsgemäßen Verfahrens ist darin zu sehen, daß die vorhergehend erläuterten Tabellen, insbesondere Ignorierungstabelle FIT, Fehlerisolierungstabelle GFIT sowie die Vergleichstabelle CT dem generischen Teil der Software der Fehlerisolierung bzw. der Fehlerisolierungsprogrammstruktur zugeordnet sind. Dies bedeutet, daß die Steuerungssoftware zur Abarbeitung dieser Tabellen auch bei unterschiedlichsten Ausprägungen der Kommunikationsanordnung unverändert verwendet werden kann und lediglich die Tabellen FIT, GFIT, CT auf die entsprechende Konfiguration der Kommunikationsanordnung KA anzupassen sind. Sind für das Erstellen dieser Tabellen FIT, GFIT, CT mit Hilfe zusätzlicher Programme komfortable Bedieneroberflächen realisierbar, kann der Aufwand für die Anpassung des generischen Teils der Software an die jeweilige Konfiguration der Kommunikationsanordnung KA minimiert werden. Der systemspezifische Teil der Software ist folglich auf diejenigen Programme beschränkt, die auf spezielle Funktionen durch die entsprechende Ausprägung der Kommunikationsanordnung KA abgestimmt sind. Diese speziellen Funktionen bzw. speziellen Programme FIP, SSIP realisieren bezogen auf die Fehlerisolierung kommunikationsanordnungsspezifische Ignorierungs- und Isolierungsprozeduren, wobei die spezifischen Isolierungsprozeduren SSIP erforderlich sind, um bei komplexen Fehlern, d.h. Fehlermeldungen FR, die der vierten Fehlerklasse FK4 zugeordnet sind, die Einheit FRU mit dem ursächlichen Fehler zu ermitteln.

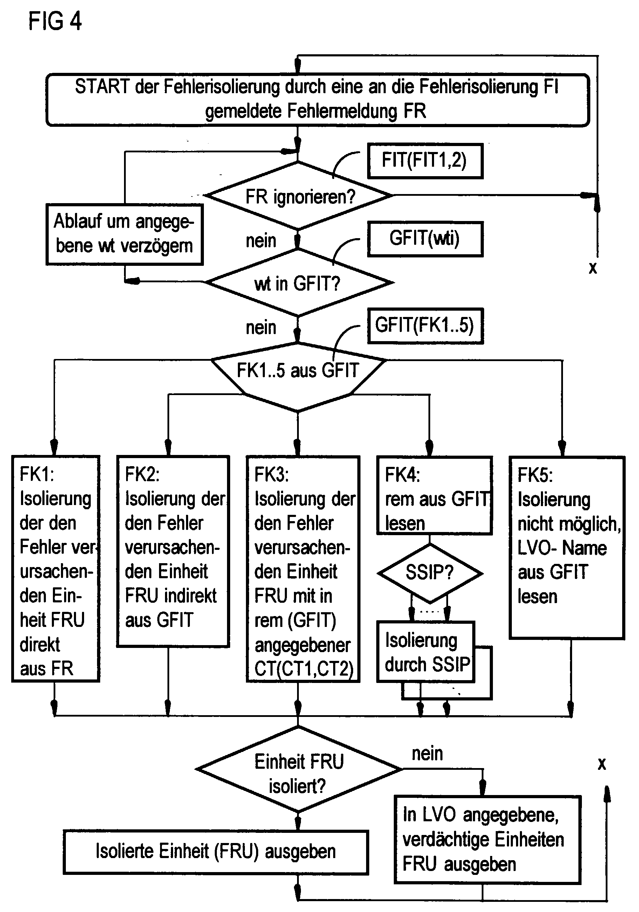

Im folgenden wird anhand des in FIG 4 dargestellten Ablaufdiagrammes das erfindungsgemäße Verfahren näher erläutert. Die Fehlerisolierung FI wird durch eine in der Kommunikationsanordnung KA übermittelte Fehlermeldung FR gestartet. In der Fehlermeldung FR ist angegeben, von welcher Einheit FRU die Fehlermeldung FR übermittelt wurde bzw. in welcher diese gebildet wurde. Mit Hilfe der ersten und zweiten Ignorierungstabelle FIT1,2 wird nun untersucht, ob die übermittelte Fehlermeldung FR zu ignorieren ist. Hierzu wird überprüft, ob eine in der ersten Spalte der ersten Ignorierungstabelle FIT1 angegebenen übergeordnete Einheit FRU(S) bereits eine zugehörige Fehlermeldung FR(j), die in der zweiten Spalte der ersten Ignorierungstabelle FIT1 steht, übermittelt hat. Ist dies der Fall, so kann die Fehlermeldung FR ignoriert werden, da sie eine Folgefehlermeldung FR des Fehlers der übergeordneten Einheit FRU(S) darstellt.

Kann die Fehlermeldung FR nicht ignoriert werden, wird überprüft, ob in der Isolierungstabelle GFIT für diese Fehlermeldung FR eine Wartezeitinformation wti eingetragen ist. Ist dies der Fall, wird nach Ablauf der in der Wartezeitinformation wti angegebenen Wartezeit wt die erste Ignorierungstabelle FIT1 erneut in der gleiche Weise abgearbeitet. Durch diese Wartezeitinformation wti ist es möglich, weitere Fehlermeldungen FR, die in der Kommunikationsanordnung KA verzögert gemeldet werden, in die Untersuchung miteinzubeziehen. Diese Maßnahme ist erforderlich, da ein vorher gemeldeter Fehler durchaus ein Folgefehler eines später gemeldeten Fehlers sein kann.

Kann die empfangene Fehlermeldung FR nach Ablauf der Wartezeit nicht ignoriert werden, wird die zweite Ignorierungstabelle FIT2 dahingehend überprüft, ob ein oder mehrere Funktionsname FN1..n angegeben sind. Bei Auffinden eines Funktionsnamens FN1..n werden die jeweils zugeordneten Funktionen sukzessive aufgerufen. Mit Hilfe dieser Funktionen werden kommunikationsanordnungs-spezifische Zustände, beispielsweise Zustände der jeweiligen Einheiten FRU ermittelt. Die Ermittlungsergebnisse sind ein Indiz dafür, ob die übermittelte Fehlermeldung FR ignoriert werden kann oder nicht.

Ergibt die beschriebene Untersuchung mittels der ersten und zweiten Ignorierungstabelle FIT1,2, daß die übermittelte Fehlermeldung FR nicht ignoriert werden kann, wird aus der Isolierungstabelle GFIT die dieser Fehlermeldung FR zugeordnete Fehlerklasse FK1..5 ermittelt. Ist die Fehlermeldung FR der ersten Fehlerklasse FK1 zugeordnet, so stellt die in der Fehlermeldung FR angegebene Einheit FRU diejenige Einheit FRU dar, die den Fehler verursacht. Der Fehler ist somit auf eine austauschbare Einheit FRU beispielsweise eine Baugruppe isoliert.

Bei einer angegebenen Zuordnung der aktuell übermittelten Fehlermeldung FR zu der zweiten Fehlerklasse FK2 ist in der Isolierungstabelle GFIT zur jeweiligen Fehlermeldung die den Fehler verursachende Einheit FRU der Kommunikationsanordnung KA durch eine Einheiteninformation ei angegeben und somit isoliert.

Handelt es sich bei der aktuell übermittelten Fehlermeldung FR um eine Fehlermeldung FR der dritten Fehlerklasse FK3, so wird mit Hilfe der aus einer ersten und zweiten Vergleichstabelle CT1,2 gebildeten Vergleichstabelle CT die den Fehler verursachende Einheit FRU isoliert. Hierzu wird anhand der Einträge in der ersten Vergleichstabelle CT1 - wobei die aktuell übermittelte Fehlermeldung FR einem dieser Einträge entspricht - untersucht, ob diese bezüglich der Fehlermeldung FR in der gleichen Hierarchieebene liegenden Einheiten FRU ebenfalls die äquivalenten Fehlermeldungen FR übermittelt haben. Ist dies nicht der Fall, so ist die in der aktuell übermittelten Fehlermeldung FR angegebene Einheit FRU als die fehlerhafte Einheit FRU isoliert. Ist dies jedoch der Fall, wird der Fehler durch die übergeordnete Einheit FRU(S) verursacht und wird auf diese Einheit FRU(S), deren Name in der ersten Zeile der zweiten Vergleichstabelle CT2 eingetragen ist, isoliert. Kann der Fehler mit Hilfe der ersten und der zweiten Vergleichstabelle CT1,2 nicht isoliert werden, so wird die aktuell übermittelte Fehlermeldung FR als nicht isolierbar an einer Ausgabeeinrichtung - nicht dargestellt - der Kommunikationsanordnung KA ausgegeben. Weiterhin werden die in der Liste LVO eingetragenen verdächtigen Einheiten FRU ausgegeben, wobei der Name dieser Liste in der zweiten Zeile der zweiten Vergleichstabelle CT2 angegeben ist.

Bei einer angegebenen Klassifizierung der aktuell übermittelten Fehlermeldung FR zu der vierten Fehlerklasse FK4 ist in der Isolierungstabelle GFIT zu der jeweiligen Fehlermeldung FR eine SSIP-Information eingetragen. Bei diesen SSIP-Informationen handelt es sich um Identifikationen, durch die fehlerspezifische, speziell auf die Schaltungstechnik der aktuellen Konfiguration der Kommunikationsanordnung KA bezogene Fehlerisolierungsprozeduren SSIP aufgerufen und ausgeführt werden. Diese systemspezifischen Fehlerisolierungsprozeduren SSIP sind auf die speziellen schaltungstechnischen Ausprägungen der jeweiligen Kommunikationsanordnung KA abgestimmt und werden speziell für die jeweilige Kommunikationsanordnung KA konzipiert bzw. entwickelt. Derartige Fehlerisolierungsprozeduren beinhalten beispielsweise spezielle Tests von Einheiten oder Systemtest, bei denen mehrere Einheiten FRU der Kommunikationsanordnung KA involviert sind - z.B. Schleifentests. Nach Ausführung der der Fehlermeldung FR zugeordneten, spezifischen Fehlerisolierungsprozeduren SSIP ist die den Fehler verursachende Einheit FRU isoliert.

Bei einer geringen Anzahl von Fehlermeldungen FR ist eine Isolierung auf eine austauschbare Einheit FRU nicht möglich, da z.B. spezifische Tests, deren Durchführung für eine Isolierung des Fehlers erforderlich sind, durch die Einheiten FRU der Kommunikationsanordnung KA nicht bereitgestellt sind. Diese Fehlermeldungen FR sind der fünften Fehlerklasse FK5 zugeordnet. Für die Fehlermeldungen FR der fünften Fehlerklasse FK5 ist in der Isolierungstabelle GFIT eine LVO-Information angegeben, die auf eine Liste LVO fehlerverdächtiger Einheiten FRU hinweist. Die in der Liste LVO für jede Fehlermeldung FR der fünften Fehlerklasse FK5 angegebenen fehlerverdächtigen Einheiten FRU werden an eine Ausgabeeinrichtung der Kommunikationsanordnung KA ausgegeben.

Die in FIG 4 dargestellte Fehlerisolierung FI ist beispielsweise in einer Fehlerisolierungsroutine im zentralen Bereich CU bzw. in der zentralen Einheit der Kommunikationsanordnung KA realisiert. Die Fehlerisolierung FI ist alternativ durch mehrere Teilroutinen in übergeordneten Bereichen RA der Kommunikationsanordnung KA realisierbar.

## Patentansprüche

1. Verfahren zum Isolieren von fehlerhaften Einheiten (FRNU,FRPU) einer Kommunikationseinrichtung (KA) mit einer auf die Einheiten (FRNU,FRPU) verteilten Prozeßarchitektur,
- bei dem jeder in der Kommunikationseinrichtung (KA) detektierte Fehler durch eine Fehlermeldung (FR) gemeldet wird,
- bei dem mit Hilfe einer Ignorierungstabelle (FIT) gemeldete, temporäre Folgefehler- und zustandsspezifische Fehlermeldungen (FR) ermittelt und ignoriert werden,
- bei dem mit Hilfe einer für jede nicht ignorierbare Fehlermeldung (FR) eine Fehlerklasse (FK1..5) angebende Fehlerisolierungstabelle (GFIT) jeweils die Fehlerklasse (FK1..5) der aktuellen, nicht ignorierbaren Fehlermeldungen (FR) ermittelt wird,
- und bei dem eine Fehlermeldung (FR) auf die den Fehler verursachende Einheit (FRNU,FRPU)
-- bei der ersten Fehlerklasse (FK1) direkt mit Hilfe der gemeldeten Fehlermeldung (FR),
-- bei der zweiten Fehlerklasse (FK2) mit Hilfe einer in der Fehlerisolierungstabelle (GFIT) eingefügten Einheiteninformation (ei),
-- bei der dritten Fehlerklasse (FK3) mit Hilfe einer in der Fehlerisolierungstabelle (GFIT) angegebenen Vergleichstabelle (CT),
-- bei der vierten Fehlerklasse (FK4) mit Hilfe zumindest einer in der Fehlerisolierungstabelle (GFIT) angegebenen systemspezifischen Fehlerisolierungsprozedur (SSIP) isoliert wird und
-- bei der fünften Fehlerklasse (FK5) die fehlerhafte Einheit nicht isolierbar ist.

2. Verfahren nach Anspruch 1, **dadurch gekennzeichnet**, daß in der Ignorierungstabelle (FIT) für jede Fehlermeldung (FR) eine erste und eine zweite Ignorierungstabelle (FIT1,2) vorgesehen ist, wobei
- in der ersten Ignorierungstabelle (FIT1) zu den übergeordneten Einheiten (FRNU(S),FRPU(S)) die übergeordneten Fehlermeldungen (FR(S), und
- in der zweiten Ignorierungstabelle (FIT2) die Funktionsnamen (FN1..n) von Funktion angegeben sind, die zur Ermittlung von speziellen, ignorierbaren Fehlermeldungen (FR) vorgesehen sind.

3. Verfahren nach Anspruch 2, **dadurch gekennzeichnet,** daß bei einer aktuell gemeldeten Fehlermeldung (FR) mit Hilfe der ersten Ignorierungstabelle (FIT1) und von zumindest temporär gespeicherten, bereits gemeldeten Fehlermeldungen (FR) überprüft wird, ob bereits eine zur aktuellen Fehlermeldung (FR) übergeordnete Fehlermeldung (FR(S)) gemeldet ist und bei einer bereits gemeldeten, übergeordneten Fehlermeldung (FR(S)) die aktuell gemeldete Fehlermeldung (FR) ignoriert wird, und
daß bei einer nicht gemeldeten, übergeordneten Fehlermeldung (FR(S)) innerhalb einer in der Fehlerisolierungstabelle (GFIT) angegebenen, fehlermeldungsindividuellen Wartezeit (wt) überprüft wird, ob eine zur aktuellen Fehlermeldung (FR) übergeordnete Fehlermeldung (FR(S)) gemeldet wird und bei einer Meldung einer übergeordneten Fehlermeldung (FR(S)) die aktuell gemeldete Fehlermeldung (FR) ignoriert wird.

4. Verfahren nach Anspruch 3, **dadurch gekennzeichnet,** daß bei einer aktuell gemeldeten Fehlermeldung (FR) bei einer nicht gemeldeten übergeordneten Fehlermeldung (FR(S)) innerhalb einer fehlermeldungsindividuellen Wartezeit (wt) die in der zweiten Ignorierungstabelle (FIT2) durch Funktionsnamen (FN1..n) identifizierten Funktionen zur Ermittlung der Ignorierung der aktuellen Fehlermeldung (FR) ausgeführt werden und entsprechend dem Ermittlungsergebnis die aktuelle Fehlermeldung (FR) ignoriert oder nicht ignoriert wird.

5. Verfahren nach einem der Ansprüche 1 bis 4, **dadurch gekennzeichnet,** daß in der Fehlerisolierungstabelle (GFIT) für jede in der Kommunikationseinrichtung (KA) auftretende, eine die Fehlermeldung (FR) meldende Einheit (FRNU,FRPU) und den Fehler anzeigende Fehlermeldung (FR)
- eine die Fehlermeldung (FR) meldende Einheit (FRNU, FRPU), sowie den Fehler anzeigende Fehlermeldung (FR),
- die Fehlerklasse (FK1..5), und
- eine fehlerklassenbezogene Zusatzinformation (rem) eingetragen ist.

6. Verfahren nach Anspruch 5, **dadurch gekennzeichnet,** daß bei einer aktuellen, nicht ignorierbaren Fehlermeldung (FR) mit dieser und der die Fehlermeldung (FR) meldenden Einheit (FRNU,FRPU) aus der Fehlerisolierungstabelle (GFIT) die Fehlerklasse (FK1..5) ermittelt wird, daß bei Zuordnung der aktuellen Fehlermeldung (FR) zu
- der ersten Fehlerklasse (FK1) die den Fehler verursachende Einheit (FRPU,FRNU) direkt durch die Fehlermeldung (FR), sowie
- der zweiten Fehlerklasse (FK2) die den Fehler verursachende Einheit (FRPU,FRNU) indirekt durch die in der Isolierungstabelle (GFIT) zugeordnete Zusatzinformation (rem) isoliert ist,
- der dritten Fehlerklasse (FK3) die Isolierung durch Abarbeitung der durch die Isolierungstabelle (GFIT) zugeordneten Zusatzinformation (rem) bestimmten Vergleichstabelle (CT) durchgeführt wird,
- der vierten Fehlerklasse (FK4) die Isolierung durch Ausführen zumindest einer der durch die in der Isolierungstabelle (GFIT) zugeordneten Zusatzinformation (rem) bestimmten, systemspezifischen Fehlerisolierungsprozedur (SSIP) durchgeführt wird, und
- der fünften Fehlerklasse (FK5) die fehlerhafte Einheit (FRNU, FRPU) nicht isolierbar ist.

7. Verfahren nach einem der Ansprüche 1 bis 6, **dadurch gekennzeichnet,** daß in der Vergleichstabelle (CT), bestehend aus einer ersten und zweiten Vergleichstabelle (CT1,2),
- die erste Vergleichstabelle (CT1) vorgesehen ist, um alle bezüglich der Fehlermeldungen (FR) im gleichen Hierarchielevel befindlichen gleichen Einheiten (FRU(1..x)) sowie die zugehörigen Fehlermeldungen (FR(1..x)) einzutragen, die bei Auftreten von vorgegebenen Fehlern von der betroffenen, übergeordneten Einheit (FRNU(S),FRPU(S)) übermittelt werden, und
- die zweite Vergleichstabelle (CT2) vorgesehen ist, um die bezüglich der in der ersten Vergleichstabelle (CT1) eingetragenen Einheiten (FRU(1..x) übergeordnete Einheiten (FRNU(S),FRPU(S) einzutragen.

8. Verfahren nach Anspruch 7, **dadurch gekennzeichnet,** daß bei einer aktuell gemeldeten, nicht ignorierbaren Fehlermeldung (FR) der ermittelten dritten Fehlerklasse (FK3) bei Vorhandensein der in der ersten Vergleichstabelle (CT1) angegebenen, äquivalenten Fehlermeldungen (FR) mit Hilfe der zweiten Vergleichstabelle (CT2) die übergeordnete, fehlerhafte Einheit (FRNU, FRPU) der Kommunikationsanordnung (KA) isoliert wird, und daß bei Nichtvorhandensein der in der ersten Vergleichstabelle (CT1) angegebenen, äquivalenten Fehlermeldung (FR) durch die aktuelle Fehlermeldung (FR) die fehlerhafte Einheit (FRNU,FRPU) isoliert ist.

9. Verfahren nach einem der vorhergehenden Ansprüche, **dadurch gekennzeichnet,** daß in einer Liste (LVO) für diejenigen Fehlermeldungen (FR), für die keine fehlerhafte Einheit (FRNU,FRPU) eindeutig isoliert werden konnte, Hinweise auf verdächtige, fehlerhafte Einheiten (FRNU,FRPU) eingetragen sind, und daß bei einer aktuellen Fehlermeldung (FR) mit der ermittelten fünften Fehlerklasse (FK5) die in der Liste (LVO) eingetragenen verdächtigen Einheiten (FRPU,FRNU) ermittelt und ausgegeben werden.
